# EUROPEAN PATENT APPLICATION

(11) **EP 4 580 143 A1**
(43) Date of publication of application: **02.07.2025**
(21) Application number: 24159667.5
(22) Date of filing: 26.02.2024
(51) Int. Cl.: H04L 41/0631, H04L 41/0677, H04W 24/04, H04L 41/0654, H04L 41/14, H04L 43/0811, H04L 43/16, H04L 41/16

(54) **DETERMINING A NETWORK SCOPE OF A ROOT CAUSE OF A NETWORK ANOMALY**

(30) Priority: 29.12.2023 US 202318400613
(71) Applicant: Juniper Networks, Inc., Sunnyvale, CA 94089 (US)
(72) Inventor: CHENG, Jing, Sunnyvale, 94089 (US); WU, Xiaoying, Sunnyvale, 94089 (US); JEA, David, Sunnyvale, 94089 (US); FREI, Randall, Sunnyvale, 94089 (US); WANG, Wenfeng, Sunnyvale, 94089 (US)
(74) Representative: D Young & Co LLP

(57) **Abstract**

A network management system includes a memory and processing circuitry in communication with the memory. The processing circuitry is configured to obtain connection event data. The connection event data indicates a plurality of disconnection events. The processing circuitry is also configured to generate, from the connection event data, aggregate data according to a plurality of network scope levels and detect, based on the aggregate data, one or more network anomalies. Additionally, the processing circuit is configured to determine, based on the aggregate data, whether a root cause of the one or more network anomalies is associated with each network scope level of the plurality of network scope levels and output an indication of the determined network scope level associated with the root cause or performing a remedial action to address the root cause at the determined network scope level.

## Description

This application claims the benefit of U.S. Patent Application No. 18/400,613, filed December 29, 2023, the entire contents of which is incorporated herein by reference.

### TECHNICAL FIELD

The disclosure relates generally to computer networks and, more specifically, to monitoring and troubleshooting computer networks.

### BACKGROUND

Commercial premises or sites, such as offices, hospitals, airports, stadiums, or retail outlets, often install complex wireless network systems, including a network of wireless access points (APs), throughout the premises to provide wireless network services to one or more wireless client devices (or simply, "clients"). APs are physical, electronic devices that enable other devices to wirelessly connect to a wired network using various wireless networking protocols and technologies, such as wireless local area networking protocols conforming to one or more of the Institute of Electrical and Electronics Engineers (IEEE) 802.11 standards (i.e., "Wi-Fi"), Bluetooth / Bluetooth Low Energy (BLE), mesh networking protocols such as ZigBee or other wireless networking technologies.

Many different types of wireless client devices, such as laptop computers, smartphones, tablets, wearable devices, appliances, and Internet of Things (IoT) devices, incorporate wireless communication technology and can be configured to connect to wireless APs when the device is in range of a compatible wireless AP in order to access a wired network. In the case of a client device running a cloud-based application, such as Voice over Internet Protocol (VoIP) applications, streaming video applications, gaming applications, or video conference applications, data is exchanged during an application session from the client device through one or more APs of a wireless network, one or more wired network devices, e.g., switches and/or routers, and one or more wide area network (WAN) devices, e.g., gateway routers, to reach the cloud-based application server.

### SUMMARY

Particular aspects are set out in the appended independent claims. Various optional embodiments are set out in the dependent claims.

In general, this disclosure describes techniques for detecting network anomalies and determining a scope of a root cause of the detected network anomalies. For example, a network may include a plurality of access point (AP) devices. A user equipment (UE) device may connect to the network via an AP device of the plurality of AP devices. A network anomaly may occur when an unusual number or an unexpected number of AP devices disconnect in a way that prevents UE devices from connecting to a network to receive services. A network management system (NMS) receives connection event data indicating a plurality of disconnection events. Each disconnection event may correspond to an AP device of the plurality of AP devices disconnecting from the NMS. The NMS may analyze the connection event data to detect anomalies and determine a scope of a root cause of the detected anomalies.

The scope of a network anomaly may depend on a network entity associated with the root cause of the network anomaly. For example, a network may comprise a plurality of network entities. These network entities may be arranged in a hierarchy such that some network entities include a larger portion of the network as compared with other network entities. The network includes one or more service providers. Each service provider of the one or more service providers provides a network service, e.g., access to the Internet, to sites operated by one or more organizations of a plurality of organizations, and each organization of the plurality of organizations operates network infrastructure for one or more sites of a plurality of sites. An organization can include an enterprise or other entity having computing or network infrastructure located at a site and using NAS devices 108 at the site, a service provider that manages NAS devices 108 at a site, or another entity involved with using or managing NAS devices 108 at a site.

Each site may include one or more AP devices of the plurality of AP devices of the network. Service providers, organizations, and sites are examples of network entities to which network anomalies can be attributed. Since a service provider may provide service to several organizations each including one or more sites, a network anomaly attributable or otherwise associated with a service provider has a broader scope than a network anomaly attributable to, experienced at, or otherwise associated with a single site. Likewise, a network anomaly attributable to an organization that manages many sites will tend to have broader scope than a network anomality associated with a single site. It is beneficial for the NMS to quickly determine the scope of a network anomaly so that proper remedial action can be taken to address the network anomaly.

The connection event data may identify an AP device associated with each disconnection event of the plurality of disconnection events, a time associated with each disconnection event of the plurality of disconnection events, and topology data indicating a location of the AP device associated with each disconnection event of the plurality of disconnection events. The NMS can therefore aggregate the connection event data based on time and/or location and/or associations with different network entities within the network, according to a plurality of network scope levels. For example, the NMS may identify disconnection events associated with each network entity of a plurality of network entities. For example, disconnection events associated with multiple sites of a single organization may indicate a network anomaly that is attributable to the organization, while disconnection events associated with sites across multiple organizations may indicate a network anomaly that is attribute to a service provider providing a network service to those sites. Each of these network entities is associated with a network scope level of a plurality of network scope levels (e.g., service provider, organization, site). The NMS may process the connection event data to detect a network anomaly and determine a network scope level associated with a root cause of the network anomaly.

The techniques of this disclosure may provide one or more improvements to the computer-related field of computer networking that are integrated within a practical application. As an example, the NMS may aggregate connection event data to indicate one or more disconnection events associated with each network entity of a plurality of network entities over a period of time. This may allow the NMS to process the connection event data to detect one or more network anomalies and simultaneously determine a network scope level associated with the root cause of the one or more network anomalies. The NMS may identify the scope of a network anomaly in a shorter amount of time as compared with systems that analyze each network scope level sequentially from the top down or from the bottom up. That is, aggregating the connection event data to indicate disconnection events associated with each network entity allows the NMS to quickly identify the scope of a network anomaly.

In one example, an NMS includes a memory and processing circuitry in communication with the memory. The processing circuitry is configured to obtain connection event data for a plurality of access point (AP) devices. The connection event data indicates a plurality of disconnection events, wherein each disconnection event of the plurality of disconnection events corresponds to an AP device of the plurality of AP devices disconnecting. The processing circuitry is also configured to generate, from the connection event data, aggregate data according to a plurality of network scope levels; detect, based on the aggregate data, one or more network anomalies; determine, based on the aggregate data, whether a root cause of the one or more network anomalies is associated with each network scope level of the plurality of network scope levels; and output an indication of the determined network scope level associated with the root cause or performing a remedial action to address the root cause at the determined network scope level.

In another example, a method includes obtaining, by processing circuitry of a network management system, connection event data for a plurality of access point (AP) devices, the connection event data indicating a plurality of disconnection events, wherein each disconnection event of the plurality of disconnection events corresponds to an AP device of the plurality of AP devices disconnecting, wherein the processing circuitry is in communication with a memory of the network management system. Additionally, the method includes generating, by the processing circuitry from the connection event data, aggregate data according to a plurality of network scope levels and detecting, by the processing circuitry based on the aggregate data, one or more network anomalies. The method also includes determining, by the processing circuitry based on the aggregate data, whether a root cause of the one or more network anomalies is associated with each network scope level of the plurality of network scope levels; and outputting, by the processing circuitry, an indication of the determined network scope level associated with the root cause or performing a remedial action to address the root cause at the determined network scope level.

In another example, a computer-readable medium includes instructions that, when executed by processing circuitry, causes the processing circuitry to obtain connection event data for a plurality of access point (AP) devices, the connection event data indicating a plurality of disconnection events, wherein each disconnection event of the plurality of disconnection events corresponds to an AP device of the plurality of AP devices disconnecting, wherein the processing circuitry is in communication with a memory of the network management system. The instructions also cause the processing circuitry to generate, from the connection event data, aggregate data according to a plurality of network scope levels; detect, based on the aggregate data, one or more network anomalies; determine, based on the aggregate data, whether a root cause of the one or more network anomalies is associated with each network scope level of the plurality of network scope levels; and output an indication of the determined network scope level associated with the root cause or performing a remedial action to address the root cause at the determined network scope level.

The details of one or more examples are set forth in the accompanying drawings and the description below. Other features, objects, and advantages will be apparent from the description and drawings, and from the claims.

### BRIEF DESCRIPTION OF DRAWINGS

FIG. 1A is a block diagram of an example network system including a network management system (NMS), in accordance with one or more techniques of this disclosure.
FIG. 1B is a block diagram illustrating further example details of the network system of FIG. 1A, in accordance with one or more techniques of this disclosure.
FIG. 2 is a block diagram of an example access point (AP), in accordance with one or more techniques of this disclosure.
FIG. 3 is a block diagram of an example NMS, in accordance with one or more techniques of the disclosure.
FIG. 4 shows an example UE device, in accordance with one or more techniques of this disclosure.
FIG. 5 is a flow diagram illustrating an example operation for detecting network anomalies and identifying root causes of detected network anomalies, in accordance with one or more techniques of this disclosure.

### DETAILED DESCRIPTION

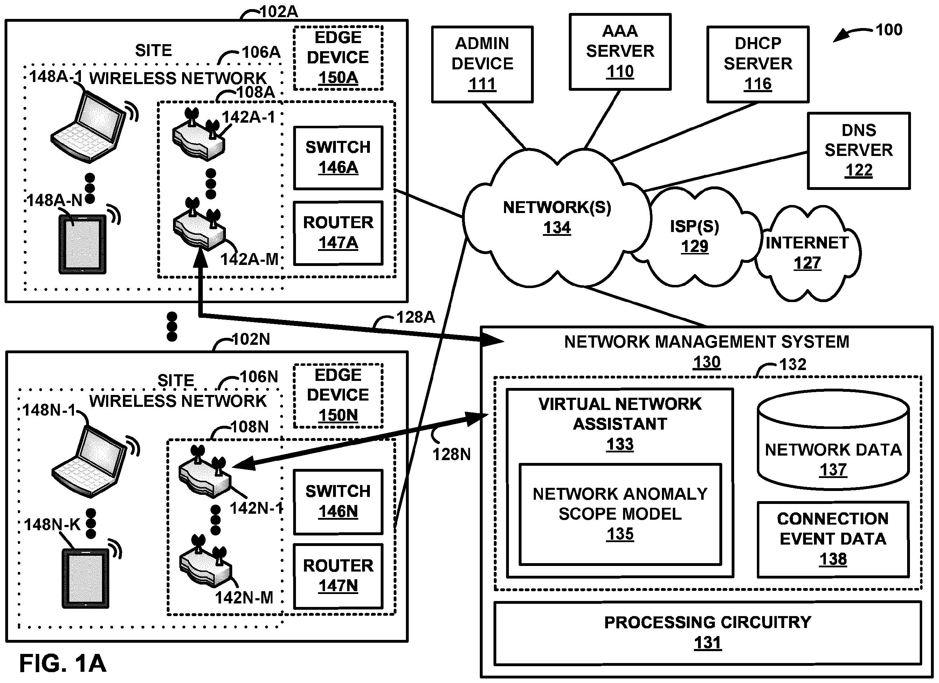

FIG. 1A is a block diagram of an example network system 100 including network management system (NMS) 130, in accordance with one or more techniques of this disclosure. Example network system 100 includes a plurality of sites 102A-102N (collectively, "sites 102") at which NMS 130 is used to manage one or more wireless networks 106A-106N (collectively, "wireless networks 106"), respectively. Although in FIG. 1A each site of sites 102 is shown as including a single wireless network of wireless networks 106, respectively, in some examples, any of sites 102 may include multiple wireless networks, and the disclosure is not limited in this respect.

Each of sites 102 includes a plurality of network access server (NAS) devices 108A-108N (collectively, "NAS devices 108"), such as access points (APs) 142A-1-142N-M (collectively, "APs 142"), switches 146A-146N (collectively, "switches 146"), or routers 147A-147N (collectively, "routers 147"). NAS devices 108 may include any network infrastructure devices capable of authenticating and authorizing client devices to access an enterprise network. Site 102A includes a plurality of APs 142A-1 through 142A-M. Similarly, site 102N includes a plurality of APs 142N-1 through 142N-M. Each AP 142 may be any type of wireless AP, including, but not limited to, a commercial or enterprise AP, a router, or any other device that is connected to a wired network and is capable of providing wireless network access to client devices within the site. APs may be referred to as "AP devices" in some cases.

Each site of sites 102 also includes a plurality of client devices, otherwise known as user equipment devices (UEs), referred to generally as UEs or client devices 148, representing various wireless-enabled devices within each site. For example, a plurality of UEs 148A-1 through 148A-K are currently located at site 102A. Similarly, a plurality of UEs 148N-1 through 148N-K are currently located at site 102N. Each UE 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include wired client-side devices, e.g., internet of things (IoT) devices such as printers, security devices, environmental sensors, or any other device connected to the wired network and configured to communicate over one or more wireless networks 106.

In order to provide wireless network services to UEs 148 and/or communicate over the wireless networks 106, APs 142 and the other wired client-side devices at sites 102 are connected, either directly or indirectly, to one or more network devices (e.g., switches, routers, or the like) via physical cables, e.g., Ethernet cables. In the example of FIG. 1A, site 102A includes a switch 146A to which one or more of APs 142A-1 through 142A-M at site 102A may be connected, and switch 146A may, in turn, be connected to a router 147A. Similarly, site 102N includes a switch 146N to which one or more of APs 142N-1 through 142N-M at site 102N may be connected, and switch 146N may, in turn, be connected to a router 147N. Although illustrated in FIG. 1A as if each site 102 includes a single switch of switches 146 and a single router of routers 147, in other examples, each site 102 may include more or fewer switches and/or routers. In addition, the APs and the other wired client-side devices of the given site may be connected to two or more switches and/or routers. In some examples, interconnected switches and routers comprise wired local area networks (LANs) at sites 102 hosting wireless networks 106. In addition, two or more switches at a site may be connected to each other and/or connected to two or more routers, and two or more routers may be connected to each other and/or connected to other routers at other sites, e.g., via a mesh or partial mesh topology in a hub-and-spoke architecture, forming at least part of a wide area network (WAN).

Example network system 100 also includes various networking components for providing, via network(s) 134 networking services within the wired network including, as examples, an Authentication, Authorization and Accounting (AAA) server 110 for authenticating users and/or UEs 148, a Dynamic Host Configuration Protocol (DHCP) server 116 for dynamically assigning network addresses (e.g., internet protocol (IP) addresses) to UEs 148 upon authentication, a Domain Name System (DNS) server 122 for resolving domain names into network addresses, and NMS 130. As shown in FIG. 1A, the various devices and systems of network system 100 are coupled together via one or more network(s) 134, which may include the Internet and/or an enterprise intranet. Network(s) 134 are shown as including Internet Service Provider networks (ISP(s)) 129, each of which is associated, deployed, and managed by a different ISP to provide network services to organizations and individuals. As such, each of ISP(s) 129 includes network infrastructure with connectivity to other networks (e.g., Internet 127) to provide network services, including Internet access. Each of sites 102 may receive network service from any one or more of ISP(s) 129.

Network anomalies, network failure, and other network issues may occur in network system 100 in ways that negatively affect an ability of UEs 148 from receiving service. One kind of network issue, referred to herein as a "network anomaly" may occur when one or more APs of APs 142 disconnect NMS 130 and thus cannot provide service to UEs 148. A network anomaly does not always occur when one or more APs disconnect. For example, if AP 142A-1 disconnects from NMS 130, one or more other APs at site 102A may remain connected to the network and able to provide service to UEs of UEs 148 at site 102A. But if several APs at site 102 or all of the APs at site 102A disconnect, this may cut off UEs at site 102A from receiving services. This is an example of a network anomaly. It may be beneficial for NMS 130 to detect network anomalies and output information corresponding to detected network anomalies so that remedial action can be taken to resolve network anomalies.

In some examples, network system 100 may represent a plurality of network entities. These network entities may be arranged in a hierarchy such that network entities lower in the hierarchy are associated with one or more network entities higher in the hierarchy, and network entities higher in the hierarchy are associated with one or more network entities lower in the hierarchy. Service providers represent network entities at the top of the hierarchy. For example, ISP(s) 129 may each provide service to one or more organizations of a plurality of organizations. Each organization of the plurality of organizations may represent a network entity including one or more sites of sites 102. For example, a service provider may provide service to a corporate headquarters campus, an "organization," that includes three buildings. Each of the three buildings represents a site of sites 102. Each site of sites 102 represents a network entity that includes one or more APs of APs 142.

Sites 102 are below organizations in the hierarchy, and organizations are below service providers in the hierarchy. This is because a network anomaly, or other network issue affecting a service provider may affect every organization that the service provider provides service to, and thus may affect every site of sites 102 that is part of an organization receiving services from the service provider experiencing the issue. When a root cause of a network anomaly is located at the organization level, the network anomaly may affect one or more sites of sites 102 corresponding to the organization without affecting sites corresponding to other organizations receiving service from the same service provider. Network anomalies may also be centered on a single site of sites 102 without affecting other sites of the same organization or sites of other organizations. NMS 130 may identify a scope of a network anomaly by determining a network entity level at which a root cause of the network anomaly is located. That is, NMS 130 may determine whether a root cause of a network anomaly is located at a service provider network scope level, at an organization network scope level, or at a site network scope level.

In the example of FIG. 1A, NMS 130 is a computing platform that manages wireless networks 106 at one or more of sites 102. NMS 130 may be cloud-based. As further described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. In some examples, NMS 130 outputs notifications, such as alerts, alarms, graphical indicators on dashboards, log messages, text / short message service (SMS) messages, email messages, and the like, and/or recommendations regarding network anomalies and other network issues to a site or network administrator interacting with and/or operating administrator device 111. Additionally, in some examples, NMS 130 operates in response to configuration input received from the administrator interacting with and/or operating administrator device 111.

The administrator and administrator device 111 may comprise IT personnel and an administrator computing device associated with one or more of sites 102. Administrator device 111 may be implemented as any suitable device for presenting output and/or accepting user input. For instance, administrator device 111 may include a display. Administrator device 111 may be a computing system, such as a mobile or non-mobile computing device operated by a user and/or by the administrator. Administrator device 111 may, for example, represent a workstation, a laptop or notebook computer, a desktop computer, a tablet computer, or any other computing device that may be operated by a user and/or present a user interface in accordance with one or more aspects of the present disclosure. Administrator device 111 may be physically separate from and/or in a different location than NMS 130 such that administrator device 111 may communicate with NMS 130 via network 134 or other means of communication.

In some examples, one or more of the NAS devices 108, e.g., APs 142, switches 146, or routers 147, may connect to edge devices 150A-150N (collectively, "edge devices 150") via physical cables, e.g., Ethernet cables. Edge devices 150 comprise cloud-managed, wireless LAN controllers. Each of edge devices 150 may comprise an on-premises device at a site of sites 102 that is in communication with NMS 130 to extend certain microservices from NMS 130 to the on-premises NAS devices 108 while using NMS 130 and its distributed software architecture for scalable and resilient operations, management, troubleshooting, and analytics.

Each one of the network devices of network system 100, e.g., servers 110, 116, and/or 122, APs 142, UEs 148, switches 146, routers 147, and any other servers or devices attached to or forming part of network system 100, may include a system log or an error log module wherein each one of these network devices records the status of the network device including normal operational status and error conditions. Throughout this disclosure, one or more of the network devices of network system 100, e.g., servers 110, 116, and/or 122, APs 142, UEs 148, switches 146, and routers 147 may be considered "third-party" network devices when owned by and/or associated with a different entity than NMS 130 such that NMS 130 does not receive, collect, or otherwise have access to the recorded status and other data of the third-party network devices. In some examples, edge devices 150 may provide a proxy through which the recorded status and other data of the third-party network devices may be reported to NMS 130.

NMS 130 may include processing circuitry 131 and memory 132. Processing circuitry 131 may include fixed function circuitry and/or programmable processing circuitry. Processing circuitry 131 may include any one or more of a microprocessor, a controller, a digital signal processor (DSP), graphics processing unit (GPU), tensor processing unit (TPU), an application specific integrated circuit (ASIC), a field-programmable gate array (FPGA), or equivalent discrete or analog logic circuitry. In some examples, processing circuitry 131 may include multiple components, such as any combination of one or more microprocessors, one or more controllers, one or more DSPs, GPUs, TPUs, one or more ASICs, or one or more FPGAs, as well as other discrete or integrated logic circuitry, which may be physically located in one or more devices in one or more physical locations.

Processing circuitry 131 may be capable of processing instructions stored in memory 132. In some examples, memory 132 includes a computer-readable medium that includes instructions that, when executed by processing circuitry 131, cause NMS 130 and processing circuitry 131 to perform various functions attributed to them herein. Memory 132 may include any volatile, non-volatile, magnetic, optical, or electrical media, such as a random-access memory (RAM), read-only memory (ROM), non-volatile RAM (NVRAM), electrically erasable programmable ROM (EEPROM), ferroelectric RAM (FRAM), dynamic random-access memory (DRAM), flash memory, or any other digital media.

Memory 132 may be configured to store virtual network assistant (VNA) 133 including network anomaly scope model 135, network data 137, and connection event data 138. In some examples, NMS 130 monitors network data 137, e.g., one or more service level expectation (SLE) metrics, received from wireless networks 106A-106N at each site 102A-102N, respectively. NMS 130 may monitor network data 137 via connection sessions 128A-128N (collectively, "connection sessions 128"), e.g., transmission control protocol (TCP) sessions, established with a plurality of NAS devices 108 at sites 102. Example connection sessions 128A and 128N are depicted in FIG. 1A, but each of NAS devices 108 may have a separate connection session with NMS 130. Although not illustrated as such in FIG. 1A, each connection session of connection sessions 128 traverses networks(s) 134, typically including one or more ISP(s) 129 providing network service to the site hosting the NAS device 108 that has the connection session with NMS 130. Connection sessions 128 between the NAS devices 108 and NMS 130 may be established as management paths. NAS devices 108 may establish other connection session as data paths to one or more cloud-based applications, application servers, and/or data centers. In some examples, a NAS device may use the same path to NMS 130 as both a management path and a data path.

NMS 130 manages network resources, such as NAS devices 108 at each site, to deliver a high-quality wireless experience to end users, IoT devices and clients at the site. For example, NMS 130 may include VNA 133 that implements an event processing platform for providing real-time insights and simplified troubleshooting for IT operations, and that automatically takes corrective action or provides recommendations to proactively address wireless network issues. VNA 133 may, for example, include an event processing platform configured to process hundreds or thousands of concurrent streams of network data 137 from sensors and/or agents associated with APs 142 and/or nodes within network 134. For example, VNA 133 of NMS 130 may include an underlying analytics and network error identification engine and alerting system in accordance with various examples described herein. The underlying analytics engine of VNA 133 may apply historical data and models to the inbound event streams to compute assertions, such as identified anomalies or predicted occurrences of events constituting network error conditions. Further, VNA 133 may provide real-time alerting and reporting to notify a site or network administrator via administrator device 111 of any predicted events, anomalies, trends, and may perform root cause analysis and automated or assisted error remediation. In some examples, VNA 133 of NMS 130 may apply machine learning techniques to identify the root cause of error conditions detected or predicted from the streams of network data 137. If the root cause may be automatically resolved, VNA 133 may invoke one or more corrective actions to correct the root cause of the error condition, thus automatically improving the underlying SLE metrics and also automatically improving the user experience.

Further example details of operations implemented by the VNA 133 of NMS 130 are described in U.S. Patent No. 9,832,082, issued November 28, 2017, and entitled "Monitoring Wireless Access Point Events," U.S. Publication No. US 2021/0306201, published September 30, 2021, and entitled "Network System Fault Resolution Using a Machine Learning Model," U.S. Patent No. 10,985,969, issued April 20, 2021, and entitled "Systems and Methods for a Virtual Network Assistant," U.S. Patent No. 10,958,585, issued March 23, 2021, and entitled "Methods and Apparatus for Facilitating Fault Detection and/or Predictive Fault Detection," U.S. Patent No. 10,958,537, issued March 23, 2021, and entitled "Method for Spatio-Temporal Modeling," all of which are incorporated herein by reference in their entirety.

In operation, NMS 130 observes, collects and/or receives network data 137, which may take the form of data extracted from messages, counters, and statistics, for example. In the example of FIG. 1A, NMS 130 also observes, collects and/or receives connection event data 138 for NAS devices 108. For each NAS device 108, connection event data 138 includes one or more connection events, e.g., connection or disconnection events, of a connection session between the NAS device and NMS 130 where the connection session is provided by a service provider. In some examples, connection event data 138 indicates one or more connection events and/or one or more disconnection events corresponding to each AP of APs 142. In some cases, NMS 130 may receive connection event data 138 from each AP of APs 142 independently from receiving network data 137. In some examples, NMS 130 may receive connection event data 138 for one or more periods of time without receiving network data 137 for the one or more periods of time. NMS 130 may process connection event data 138 to identify network anomalies or other network characteristics without processing network data 137. In some examples, NMS 130 may process both network data 137 and connection event data 138 to identify network anomalies or other network characteristics.

In the context of APs 142, a connection event may occur when one or more APs of APs 142 connects to NMS 130 via a connection session of connection sessions 128. For example, a connection event may occur when AP 142A-1 connects to NMS 130 via connection session 128A. These connection sessions may represent TCP sessions or sessions according to other communication protocols. Connection event data 138 may include, for each connection event of a plurality of connection events, a timestamp indicating a time of the connection event, an AP of APs 142 corresponding to the connection event, and topology information indicating a location of the AP corresponding to the connection event within the network. For example, the topology information may indicate a site of sites 102 in which the AP is located, an organization corresponding to the site, and a service provider providing service to the site. NMS 130 may store the topology information independently of connection event data 138 and key an identifier for an AP in connection event data 138 to the stored topology information to determine a site 102 hosting the AP, an organization corresponding to the site, and a service provider providing service to the site.

A disconnection event may occur when an AP of APs 142 disconnects from NMS 130 to end a session with one or more other devices. For example, a disconnection event may occur when connection session 128A terminates, disconnecting AP 142A-1 through 142A-M from NMS 130. Connection event data 138 may include, for each disconnection event of a plurality of disconnection events, a timestamp indicating a time of the disconnection event, an AP of APs 142 corresponding to the disconnection event, and topology information indicating a location of the AP corresponding to the disconnection event within the network. The topology information may indicate a site of sites 102 in which the AP is located, an organization corresponding to the site, and a service provider providing service to the organization.

In some examples, processing circuitry 131 of NMS 130 is configured to obtain, from APs 142, connection event data 138 indicating a plurality of disconnection events. Each disconnection event of the plurality of disconnection events may correspond to an AP of APs 142 disconnecting from NMS 130. Processing circuitry 131 may be configured to apply network anomaly scope model 135 process connection event data 138 to detect one or more network anomalies. In some examples, a network anomaly may correspond to one or more disconnection events of the plurality of disconnection events. A disconnection event does not necessarily amount to a network anomaly, but a number of disconnection events involving APs 142 hosted at one or more sites 102 may be evidence of a network anomaly that disrupts service provided to UEs 148.

In accordance with techniques of this disclosure, processing circuitry 131 may apply network anomaly scope model 135 to determine, based on the connection event data 138, whether a root cause of the one or more network anomalies is associated with each network scope level of a plurality of network scope levels.

In some examples, processing circuitry 131 of NMS 130 is configured to apply network anomaly scope model 135 to determine whether the root cause of one or more detected network anomalies is associated with each network scope level independently of the other network scope levels. This means that network anomaly scope model 135 may simultaneously determine whether the root cause is associated with each network scope level of the plurality of network scope levels without some determinations being dependent on other determinations. For example, network anomaly scope model 135 is configured to determine whether the root cause is associated with an organization independently and without first determining whether the root cause is associated with a site.

To determine whether the root cause of one or more detected anomalies is associated with each network scope level of a plurality of network scope levels, NMS 130 may aggregate connection event data 138 to organize disconnection events based on time, network entity, and scope. For example, NMS 130 may aggregate connection event data 138 to indicate one or more disconnection events corresponding to each service provider of one or more service providers, indicate one or more disconnection events corresponding to each organization of a plurality of organizations, and indicate one or more disconnection events corresponding to each site of sites 102. A particular disconnection event may be associated with multiple network entities. For example, a disconnection event for AP 142A-M involving a disconnection of connection session 128A with NMS 130 is associated with site 102A, at least one of ISP(s) 129 providing network service to that site, and with the organization that manages site 102A. Disconnection events are associated with time stamps indicating times at which the disconnection events occurred. By aggregating the connection event data 138 based on network entity, network scope level, and time, processing circuitry 131 may apply network anomaly scope model 135 to identify a network scope level associated with the root cause of one or more detected anomalies more efficiently as compared with systems that do not aggregate connection event data in this way.

When a root cause of a network anomaly is associated with a network scope level, this means that a network entity of the network scope level experiences one or more issues that cause the anomaly to manifest in places across the network entity. A plurality of network scope levels may include a service provider network scope level, an organization network scope level, and a site network scope level. The service provider network scope level corresponds to one or more service providers. The organization network scope level corresponds to one or more organizations. The site network scope level corresponds to sites 102. Processing circuitry 131 of NMS 130 may apply network anomaly scope model 135 to determine, based on the connection event data 138, whether the root cause of one or more network anomalies is associated with the service provider network scope level, whether the root cause of the one or more network anomalies is associated with the organization network scope level, and whether the root cause of the one or more network anomalies is associated with the site network scope level.

In some examples, to aggregate connection event data 138 based on network entity, network scope level, and time, processing circuitry 131 may generate network scope information by identifying, for each disconnection event of the plurality of disconnection events of connection event data 138, an AP of APs 142 corresponding to the disconnection event, a site of sites 102 corresponding to the disconnection event, an organization of a plurality of organizations corresponding to the disconnection event; and a service provider of the one or more service providers corresponding to the disconnection event. NMS 130 may receive information from APs 142 and/or the organizations, the information indicating the AP MAC address, site, organization, and AP public IP address. Based on the public IP address for an AP, NMS 130 can obtain information about the service provider that provides network service to the AP. When a disconnection event for one of connection sessions 128 occurs, the now-disconnected connection session is associated with an IP address for the AP that is an endpoint of the connection session. NMS 130 may this IP address to lookup the site, organization, and service provider for the corresponding AP. Network anomaly scope model 135 may detect one or more network anomalies based on the network scope information. Network anomaly scope model 135 may determine, based on the network scope information, whether the root cause of the one or more network anomalies is associated with each network scope level of the plurality of network scope levels.

Network anomaly scope model 135 may, in some examples, include a transformer model. Processing circuitry 131 of NMS 300 may generate, based on the connection event data 138, an input matrix including a plurality of entries. Each entry of the plurality of entries of the input matrix includes connection event data corresponding to a network entity of a plurality of network entities, the connection event data indicating a level of impact of a network failure at the network entity. This operates as a scaling factor. The level of impact of the network failure at the network entity corresponding to each entry of the plurality of entries of the input matrix will be greater for network entity that involves larger numbers of APs. For example, a network failure at one of ISP(s) 129 may impact tens of thousands of APs, while network failure attributable to an organization may impact merely thousands of APs. Network failure at one of sites 102 may impact hundreds of APs. The scaling factor for a particular network entity scope may be based on a mean or median number of AP disconnects at that network entity scope. In one example, to generate the input matrix, data for multiple organizations (e.g., 1000) and multiple ISP(s) 129 (e.g., 500) are stacked into a number of entries / rows of the input matrix (e.g., 1500 entries).

To detect the one or more network anomalies, processing circuitry 131 is configured to apply the transformer model of network anomaly scope model 135 to generate, based on the input matrix, an output matrix including a plurality of entries corresponding to the plurality of entries of the input matrix. Each entry of the plurality of entries of the output matrix includes a severity score that indicates a probability that an anomaly of the one or more anomalies is present at the network entity corresponding to the entry. To detect the one or more network anomalies, processing circuitry 131 is configured to determine the severity score for each entry of the plurality of entries of the output matrix based on the number of disconnection events associated with the network entity corresponding to the entry over the period of time. Processing circuitry 131 may compare the severity score of each entry of the plurality of entries of the output matrix with one or more anomaly thresholds. Processing circuitry 131 may detect the one or more network anomalies based on comparing the severity score of each entry of the plurality of entries of the output matrix with the one or more anomaly thresholds.

In some examples, each entry of the plurality of entries of the input matrix for the transformer model of network anomaly scope model 135 further includes scope information indicating a network scope level of the plurality of network scope levels corresponding to the network entity of the plurality of network entities. Processing circuitry 131 is configured to determine whether the root cause of the one or more network anomalies is associated with each network scope level of the plurality of network scope levels based on the detected one or more network anomalies and the scope information for each entry of the plurality of entries of the input matrix. For example, by processing the input matrix to generate the output matrix, network anomaly scope model 135 may be configured to determine whether a root cause of the one or more network anomalies is associated with each network scope level of a plurality of network scope levels based on severity scores associated with network entities of each network scope level.

In accordance with one specific implementation, a computing device is part of NMS 130. In accordance with other implementations, NMS 130 may comprise one or more computing devices, dedicated servers, virtual machines, containers, services, or other forms of environments for performing the techniques described herein. Similarly, computational resources and components implementing VNA 133 may be part of the NMS 130, may execute on other servers or execution environments, or may be distributed to nodes within the network.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network system 100, and may or may not form a part of NMS 130.

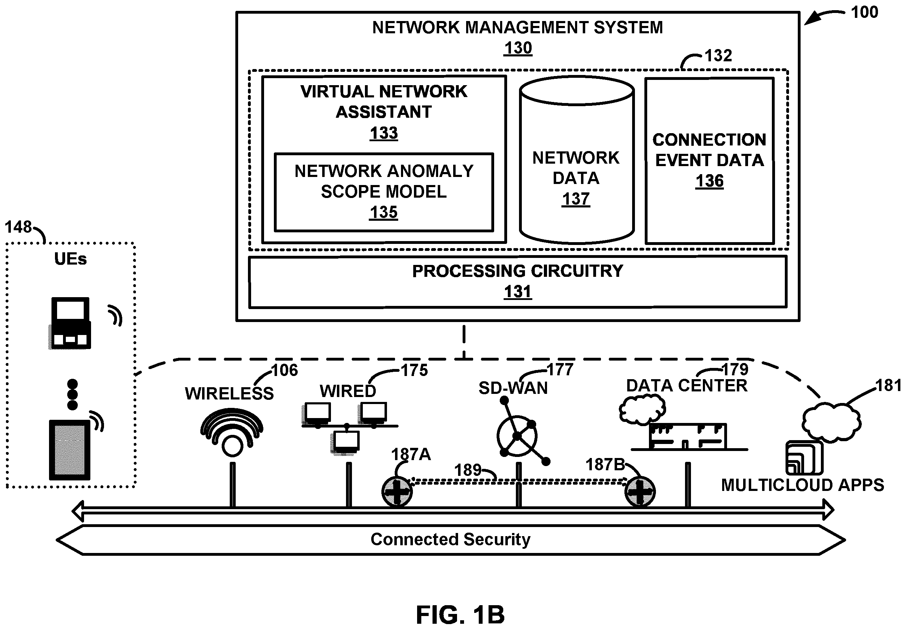

FIG. 1B is a block diagram illustrating further example details of the network system 100 of FIG. 1A, in accordance with one or more techniques of this disclosure. In this example, FIG. 1B illustrates NMS 130 configured to operate according to an artificial intelligence / machine-learning-based computing platform providing comprehensive automation, insight, and assurance (Wi-Fi Assurance, Wired Assurance and WAN assurance) spanning from "client," e.g., user devices 148 connected to wireless networks 106 and wired LANs 175 (far left of FIG. 1B), to "cloud," e.g., cloud-based application services 181 that may be hosted by computing resources within data centers 179 (far right of FIG. 1B).

As described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. For example, NMS 130 may be configured to proactively monitor and adaptively configure network system 100 so as to provide self-driving capabilities. Moreover, VNA 133 includes a natural language processing engine to provide artificial intelligence (AI)-driven support and troubleshooting, anomaly detection, AI-driven location services, and AI-driven radio frequency (RF) optimization with reinforcement learning.

NMS 130 includes processing circuitry 131 and memory 132. Memory 132 is configured to store VNA 133 including network anomaly scope model 135, network data 137, and connection event data 136. In some examples, NMS 130 is configured to operate according to an artificial intelligence or machine-learning-based computing platform by using processing circuitry 131 to train network anomaly scope model 135 based on training data stored by memory 132 of NMS 130. In some examples, the training data may include a plurality of sets of training connection event data. Each set of training connection event data of the plurality of sets of training connection event data may indicate whether the set of training connection event data indicates a network anomaly, a network scope level associated with the network anomaly, a network entity associated with the network anomaly, or any combination thereof.

As illustrated in the example of FIG. 1B, NMS 130 also provides configuration management, monitoring and automated oversight of software defined wide area network (SD-WAN) 177, which operates as an intermediate network communicatively coupling wireless networks 106 and wired LANs 175 to data centers 179 and cloud-based application services 181. In general, SD-WAN 177 provides seamless, secure, traffic-engineered connectivity between "spoke" routers 187A of wired LANs 175 hosting wireless networks 106, such as branch or campus networks, to "hub" routers 187B further up the cloud stack toward cloud-based application services 181. SD-WAN 177 often operates and manages an overlay network on an underlying physical Wide-Area Network (WAN), which provides connectivity to geographically separate customer networks. In other words, SD-WAN 177 extends Software-Defined Networking (SDN) capabilities to a WAN and allows network(s) to decouple underlying physical network infrastructure from virtualized network infrastructure and applications such that the networks may be configured and managed in a flexible and scalable manner.

In some examples, underlying routers of SD-WAN 177 may implement a stateful, session-based routing scheme in which the routers 187A, 187B dynamically modify contents of original packet headers sourced by client devices 148 to steer traffic along selected paths, e.g., path 189, toward cloud-based application services 181 without requiring use of tunnels and/or additional labels. In this way, routers 187A, 187B may be more efficient and scalable for large networks since the use of tunnel-less, session-based routing may enable routers 187A, 187B to achieve considerable network resources by obviating the need to perform encapsulation and decapsulation at tunnel endpoints. Moreover, in some examples, each router 187A, 187B may independently perform path selection and traffic engineering to control packet flows associated with each session without requiring use of a centralized SDN controller for path selection and label distribution. In some examples, routers 187A, 187B implement session-based routing as Secure Vector Routing (SVR), provided by Juniper Networks, Inc.

In some examples, NMS 130 may enable intent-based configuration and management of network system 100, including enabling construction, presentation, and execution of intent-driven workflows for configuring and managing devices associated with wireless networks 106, wired LANs 175, and/or SD-WAN 177. For example, declarative requirements express a desired configuration of network components without specifying an exact native device configuration and control flow. By utilizing declarative requirements, what should be accomplished may be specified rather than how it should be accomplished. Declarative requirements may be contrasted with imperative instructions that describe the exact device configuration syntax and control flow to achieve the configuration. By utilizing declarative requirements rather than imperative instructions, a user and/or user system is relieved of the burden of determining the exact device configurations required to achieve a desired result of the user/system. For example, it is often difficult and burdensome to specify and manage exact imperative instructions to configure each device of a network when various different types of devices from different vendors are utilized. The types and kinds of devices of the network may dynamically change as new devices are added and device failures occur. Managing various different types of devices from different vendors with different configuration protocols, syntax, and software versions to configure a cohesive network of devices is often difficult to achieve. Thus, by only requiring a user/system to specify declarative requirements that specify a desired result applicable across various different types of devices, management and configuration of the network devices becomes more efficient. Further example details and techniques of an intent-based NMS are described in U.S. Patent No. 10,756,983, entitled "Intent-based Analytics," and U.S. Patent No. 10,992,543, entitled "Automatically generating an intent-based network model of an existing computer network," each of which is hereby incorporated by reference.

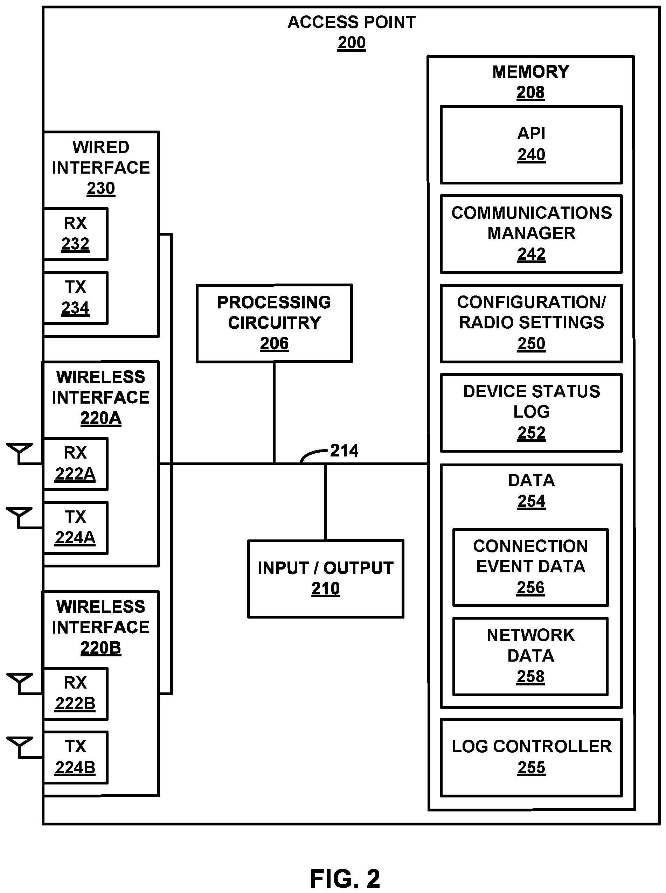

FIG. 2 is a block diagram of an example AP 200, in accordance with one or more techniques of this disclosure. Example AP 200 shown in FIG. 2 may be used to implement any of APs 142 as shown and described herein with respect to FIG. 1A. AP 200 may comprise, for example, a Wi-Fi, Bluetooth and/or Bluetooth Low Energy (BLE) base station or any other type of wireless AP. In the example of FIG. 2, AP 200 includes processing circuitry 206, memory 208, and input/output 210, wireless interfaces 220A-220B (collectively, "wireless interfaces 220"), and wired interface 230 coupled together via a bus 214 over which the various elements may exchange data and information.

First and second wireless interfaces 220A and 220B represent wireless network interfaces and include receivers 222A and 222B, respectively, each including a receive antenna via which AP 200 may receive wireless signals from wireless communications devices, such as UEs 148 of FIG. 1A. First and second wireless interfaces 220A and 220B further include transmitters 224A and 224B, respectively, each including transmit antennas via which AP 200 may transmit wireless signals to wireless communications devices, such as UEs 148 of FIG. 1A. In some examples, first wireless interface 220A may include a Wi-Fi 802.11 interface (e.g., 2.4 GHz and/or 5 GHz) and second wireless interface 220B may include a Bluetooth interface and/or a Bluetooth Low Energy (BLE) interface. Although AP 200 is illustrated as including two wireless interfaces 220, AP 200 may include more than two wireless interfaces or less than two wireless interfaces in some cases.

Wired interface 230 represents a physical network interface and includes a receiver 232 and a transmitter 234 for sending and receiving network communications, e.g., packets. Wired interface 230 couples, either directly or indirectly, AP 200 to a wired network device, such as one of switches 146 of FIG. 1A, within the wired network via a cable, such as an Ethernet cable. Although AP 200 is illustrated as including a single wired interface 230, AP 200 may include more than one wired interface or no wired interfaces.

Processing circuitry 206 may include one or more programmable hardware-based processors configured to execute software instructions, such as those used to define a software or computer program, stored to a computer-readable storage medium (such as memory 208), such as non-transitory computer-readable mediums including a storage device (e.g., a disk drive, or an optical drive) or a memory (such as Flash memory or RAM) or any other type of volatile or non-volatile memory, that stores instructions to cause the processing circuitry 206 to perform the techniques described herein.

Memory 208 includes one or more devices configured to store programming modules and/or data associated with operation of AP 200. For example, memory 208 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the processing circuitry 206 to perform the techniques described herein.

In this example, memory 208 stores executable software including an application programming interface (API) 240, a communications manager 242, configuration settings 250, a device status log 252, data 254, and log controller 255. Device status log 252 includes a list of events specific to AP 200. The events may include a log of both normal events and error events such as, for example, memory status, reboot or restart events, crash events, cloud disconnect with self-recovery events, low link speed or link speed flapping events, Ethernet port status, Ethernet interface packet errors, upgrade failure events, firmware upgrade events, configuration changes, etc., as well as a time and date stamp for each event. Log controller 255 determines a logging level for the device based on instructions from NMS 130.

Data 254 may store any data used and/or generated by AP 200. For example, connection event data 256 may include information corresponding to one or more connection events corresponding to AP 200 and one or more disconnection events corresponding to AP 200. For example, connection event data 256 may include a timestamp indicating a time of each connection event of the one or more connection events. Connection event data 256 may include a timestamp indicating a time of each disconnection event of the one or more disconnection events. For each disconnection event and each connection event, connection event data 256 may indicate that AP 200 is associated with the event. This may involve indicating AP 200 and/or indicating a location of AP 200 within the topology of the network. Network data 258 may include data collected from UEs 148, such as data used to calculate one or more SLE metrics, which is transmitted by AP 200 for cloud-based management of wireless networks 106A by NMS 130.

Input/output (I/O) 210 represents physical hardware components that enable interaction with a user, such as buttons, a display, and the like. Although not shown, memory 208 typically stores executable software for controlling a user interface with respect to input received via I/O 210. Communications manager 242 includes program code that, when executed by processing circuitry 206, allow AP 200 to communicate with UEs 148 and/or network 134 via any of wireless interfaces 220 and/or wired interface 230. Configuration settings 250 include any device settings for AP 200 such as radio settings for each of wireless interface 220. These settings may be configured manually or may be remotely monitored and managed by NMS 130 to optimize wireless network performance on a periodic (e.g., hourly or daily) basis.

As described herein, AP 200 may measure and report network data from device status log 252 to NMS 130. Additionally, or alternatively, AP 200 may measure and report connection event data 256 and/or network data 258 to NMS 130. Network data collected by device status log 252 and network data 258 may comprise event data, telemetry data, and/or other SLE-related data. The network data may include various parameters indicative of the performance and/or status of the wireless network. The parameters may be measured and/or determined by one or more of the UE devices and/or by one or more of the APs in a wireless network. NMS 130 may determine one or more SLE metrics based on the SLE-related data received from the APs in the wireless network and store the SLE metrics as network data 137 (FIG. 1A).

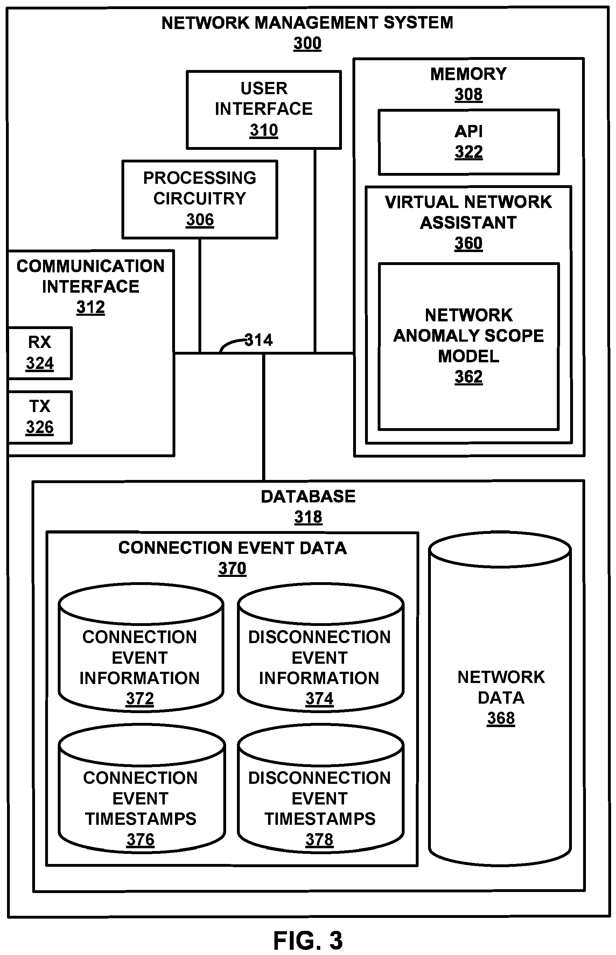

FIG. 3 is a block diagram of an example NMS 300, in accordance with one or more techniques of the disclosure. NMS 300 may be used to implement, for example, NMS 130 in FIGS. 1A-1B. In such examples, NMS 300 is responsible for monitoring and management of one or more wireless networks 106 at sites 102 of FIG. 1A, respectively. In some examples, NMS 300 is responsible for monitoring and management of wireless networks 106 at sites 102, respectively. Additionally, or alternatively, NMS 300 is responsible for monitoring and management of network 134, servers 110, 116, and/or 122, or any combination thereof.

NMS 300 includes a processing circuitry 306, memory 308, user interface 310, communication interface 312, and database 318. Memory 308 is configured to store API 322 and VNA 360 including network anomaly scope model 362. Communication interface 312 includes a receiver 324 and a transmitter 326. Database 318 is configured to store network data 368 and connection event data 370. Connection event data 370 includes connection event information 372, disconnection event information 374, connection event timestamps 376, and disconnection event timestamps 378. Although database 318 is illustrated in FIG. 3 as being separate from memory 308, in some examples, memory 308 is configured to store database 318.

The various elements are coupled together via a bus 314 over which the various elements may exchange data and information. Processing circuitry 306 may be an example of processing circuitry 131 of FIGS. 1A-1B. Memory 308 may be an example of memory 132 of FIGS. 1A-1B. VNA 360 may be an example of VNA 133 of FIGS. 1A-1B. Network anomaly scope model 362 may be an example of network anomaly scope model 135 of FIGS. 1A-1B. Network data 368 may be an example of network data 137 of FIGS. 1A-1B. Connection event data 370 may be an example of connection event data 138 of FIGS. 1A-1B.

In some examples, NMS 300 receives data from APs 142, switches 146, routers 147, UEs 148, routers 187 and other network nodes within network system 100, which may be used to calculate one or more metrics corresponding to network system 100. NMS 300 may analyze this data for cloud-based monitoring and/or management of wireless networks 106 at sites 102, monitoring and/or management servers 110, 116, and/or 122, and monitoring and/or management of network 134. In some examples, NMS 300 may be part of another server shown in FIG. 1A or a part of any other server.

Processing circuitry 306 may include fixed function circuitry and/or programmable processing circuitry. Processing circuitry 306 may include any one or more of a microprocessor, a controller, a DSP, GPU, TPU, an ASIC, an FPGA, or equivalent discrete or analog logic circuitry. In some examples, processing circuitry 306 may include multiple components, such as any combination of one or more microprocessors, one or more controllers, one or more DSPs, GPUs, TPUs, one or more ASICs, or one or more FPGAs, as well as other discrete or integrated logic circuitry, which may be physically located in one or more devices in one or more physical locations. Processing circuitry 306 may execute software instructions, such as those used to define a software or computer program, stored to a computer-readable storage medium (such as memory 308), such as non-transitory computer-readable mediums including a storage device (e.g., a disk drive, or an optical drive) or a memory (such as Flash memory or RAM) or any other type of volatile or non-volatile memory, that stores instructions to cause the processing circuitry 306 to perform the techniques described herein.

Processing circuitry 306 may be capable of processing instructions stored in memory 308. In some examples, memory 308 includes a computer-readable medium that includes instructions that, when executed by processing circuitry 306, cause NMS 300 and processing circuitry 306 to perform various functions attributed to them herein. Memory 308 may include any volatile, non-volatile, magnetic, optical, or electrical media, such as a RAM, ROM, NVRAM, EEPROM, FRAM, DRAM, flash memory, or any other digital media. Memory 308 may include one or more devices configured to store programming modules and/or data associated with operation of NMS 300. For example, memory 308 may include a computer-readable storage medium, such as a non-transitory computer-readable medium including a storage device (e.g., a disk drive, or an optical drive) or a memory (such as Flash memory or RAM) or any other type of volatile or non-volatile memory, that stores instructions to cause the processing circuitry 306 to perform the techniques described herein.

A user, such as an administrator, may interact with NMS 300 through user interface 310. User interface 310 may include a display such as a liquid crystal display (LCD), a light-emitting diode (LED) display, an organic LED (OLED) display, or other type of screen, with which processing circuitry 306 may present information related to NMS 300, network devices, or other devices of network system 100. In addition, user interface 310 may include an input mechanism to receive input from the user. The input mechanisms may include, for example, any one or more of buttons, a keypad (e.g., an alphanumeric keypad), a peripheral pointing device, a touch screen, or another input mechanism that allows the user to navigate through user interfaces presented by processing circuitry 306 of NMS 300 and provide input. In other examples, user interface 310 also includes audio circuitry for providing audible notifications, instructions, or other sounds to the user, receiving voice commands from the user, or both. Memory 308 may include instructions for operating user interface 310.

Communication interface 312 may include, for example, an Ethernet interface. Communication interface 312 couples NMS 300 to a network and/or the Internet, such as any of network 134 as shown in FIG. 1A, and/or any local area networks. Communication interface 312 includes a receiver 324 and a transmitter 326 via which NMS 300 receives/transmits data and information to/from any of servers 110, 116, and/or 122, APs 142, switches 146, routers 147, UEs 148 and/or any other network nodes, devices, or systems forming part of network system 100 such as shown in FIGS. 1A-1B. In some scenarios described herein in which network system 100 includes "third-party" network devices that are owned and/or associated with different entities than NMS 300, NMS 300 does not receive, collect, or otherwise have access to network data from the third-party network devices.

NMS 300 may receive connection event data 370 via receiver 324 of communication interface 312. Connection event data 370 may include information corresponding to a plurality of connection events corresponding to APs 142 and information corresponding to a plurality of disconnection events corresponding to APs 142. For example, connection event data 370 includes connection event information 372 and connection event timestamps 376 corresponding to the plurality of connection events. Connection event data 370 includes disconnection event information 374 and disconnection event timestamps 378 corresponding to the plurality of connection events.

Each connection event of the plurality of connection events corresponds to an AP of APs 142 and each disconnection event of the plurality of disconnection events corresponds to an AP of APs 142. A connection event occurs when an AP of APs 142 connects to NMS 130 via a connection session of connection sessions 128). Connection sessions may include sessions according to TCP or sessions according to another communication protocol. A disconnection event occurs when an AP of APs 142 disconnects from NMS 130, such as when one of connection sessions 128 terminates.

In some examples, one or more disconnection events may be associated with a network anomaly that disrupts, degrades, or cuts off service to one or more UEs of UEs 148. For example, when one or more APs of APs 142 disconnect from NMS 130, this may lead to one or more UEs of UEs 148 being unable to receive service via the network. An AP disconnecting from NMS 130 does not necessarily cause UEs to be disconnected NMS 130. For example, when UE 148A-1 is within range of more than one AP connected to the network and one of these APs disconnects NMS 130, UE 148A-1 may continue to connect to the network via one or more APs that remains connected to the network. But when every AP within range of UE 148A-1 disconnects, this may indicate one or more conditions that cut UE 148A-1 off from receiving services, resulting in a network anomaly.

In some examples, a root cause of a network anomaly may be associated with a network entity such as a service provider, an organization, a site, or another network entity. For example, the root cause of one or more of APs of APs 142A-1 through 148A-M disconnecting NMS 130 may be located at site 102A and the root cause is not located higher in the network hierarchy such as within an organization corresponding to site 102A or within a service provider that provides service to site 102A. In other examples, the root cause of one or more of APs of APs 142A-1 through 148A-M disconnecting NMS 130 may be located at the organization corresponding to site 102A or at the service provider that provides service to site 102A. In these examples, APs in sites other than site 102A may be affected by the network anomaly, because organizations can include more than one site and service providers can provide service to more than one organization and more than one site.

It may be beneficial for NMS 300 to apply network anomaly scope model 362 to detect one or more network anomalies, identify one or more network entities corresponding to each detected anomaly, and determine whether a root cause of each detected network anomaly is associated with each network scope level of a plurality of network scope levels. For example, it may be beneficial to determine whether a root cause of a network anomaly affecting site 102A is associated with site 102A itself, an organization corresponding to site 102A, a service provider providing service to site 102A, or another network entity. This is because to remedy a network anomaly, it is beneficial to determine where the root cause of the problem is located.

Connection event information 372 indicates an AP of APs 142 corresponding to each connection event of the plurality of connection events of connection event data 370. In some examples, connection event information 372 includes topology information indicating a location of the AP corresponding to each connection event of the plurality of connection events within the network. For example, connection event information 372 may indicate that a connection event is associated with AP 148A-1, that AP 148A-1 is located at site 102A, that site 102A is part of an organization of a plurality of organizations, and that a service provider of one or more service providers provides service to the organization and to site 102A. In some examples, connection event information 372 may indicate an AP of APs 142 corresponding to each connection event of the plurality of connection events and database 318 stores separate topology information indicating a location of each AP of APs 142 within the topology of the network.

Disconnection event information 374 indicates an AP of APs 142 corresponding to each disconnection event of the plurality of disconnection events of connection event data 370. In some examples, disconnection event information 374 includes topology information indicating a location of the AP corresponding to each disconnection event of the plurality of connection events within the network. For example, disconnection event information 374 may indicate that a disconnection event is associated with AP 148A-M, that AP 148A-M is located at site 102A, that site 102A is part of an organization of a plurality of organizations, and that a service provider of one or more service providers provides service to the organization and to site 102A. In some examples, disconnection event information 374 may indicate an AP of APs 142 corresponding to each disconnection event of the plurality of disconnection events and database 318 stores separate topology information indicating a location of each AP of APs 142 within the topology of the network.

Connection event timestamps 376 may include a timestamp indicating a time of each connection event of the plurality of connection events. Disconnection event timestamps 378 may include a timestamp indicating a time of each disconnection event of the plurality of disconnection events. Connection event timestamps 376, in some examples, are saved in database 318 as part of connection event information 372. Disconnection event timestamps 378, in some examples, are saved in database 318 as part of disconnection event information 374. In some examples, connection event timestamps 376 and disconnection event timestamps 378 are important for identifying network anomalies. For example, a large number of disconnection events occurring within a short period of time may indicate a network anomaly that results in UEs 148 to experience disrupted service.

In some examples, when a service provider fails or goes offline causing a network anomaly, organizations and sites receiving service from the service provider may experience a high rate of AP disconnection events. During normal operation, a low number of AP disconnect events (e.g., 10 AP disconnect events) may occur in an organization per day, but a network anomaly corresponding to a service provider failure may cause a high number of APs (e.g., more than 100 APs) at the organization to disconnect. When a service provider fails, this may cause a very large negative impact involving hundreds or thousands of AP disconnect events at organizations and sites receiving service from the service provider. In examples where a service provider fails or goes offline causing a network anomaly, the root cause of the network anomaly is associated with a service provider network scope level.

The root cause of a network anomaly is not necessarily associated with the service provider network scope level. An organization or a site may be associated with a root cause of a network anomaly in some cases. For example, when the root cause of a network anomaly is located at site 102A, the network anomaly may affect site 102A without spreading to other sites. When the root cause of a network anomaly is located at an organization corresponding to site 102A, the network anomaly may affect site 102A and other sites that are part of the organization. This means that it may be beneficial to determine a network scope level associated with the root cause of a network anomaly so that remedial action can be taken to resolve the network anomaly. By using NMS 300 to determine whether a root cause of a network anomaly is associated with each network scope level of a plurality of network scope levels, network system 100 may identify the location of the root cause of the network anomaly.

A rate of disconnect events may indicate a network anomaly. For example, NMS 300 may determine that a network anomaly is occurring based on determining that a high number of disconnect events occur within a period of time, or based on determining that a high rate of disconnect events occur per unit time. NMS 300 may perform a scope analysis to detect the network scope level associated with the root cause of a network anomaly. Example network scope levels include a site network scope level, an organization network scope level, a cluster network scope level, and a service provider network scope level. It may be time consuming to determine whether the root cause of a network anomaly is associated with each network scope level of a plurality of network scope levels sequentially on a scope-by-scope basis. For example, it may be time consuming to first determine whether the root cause is associated with the site network scope level, then subsequently determine whether the root cause is associated with the organization network scope level, and so on. To determine whether the root cause of a network anomaly is associated with each network scope level of a plurality of network scope levels in a time-efficient manner, NMS 300 may simultaneously determine whether each network scope level of a plurality of network scope levels is associated with the root cause.

Processing circuitry 306 of NMS 300 may obtain, from APs 142, connection event data 370 indicating a plurality of disconnection events. Each disconnection event of the plurality of disconnection events corresponds to an AP of APs 142. Processing circuitry 306 may apply network anomaly scope model 362 to detect, based on connection event data 370, one or more network anomalies. For example, network anomaly scope model 362 may process disconnection event timestamps 378 to identify the one or more network anomalies in response to identifying a high rate of disconnection events per unit time. Processing circuitry 306 may apply network anomaly scope model 362 to determine, based on connection event data 370, whether a root cause of the one or more network anomalies is associated with each network scope level of a plurality of network scope levels. Network anomaly scope model 362 may process connection event data 370 to simultaneously determine whether the root cause is associated with each network scope level of a plurality of network scope levels.

In some examples, network anomaly scope model 362 comprises a transformer model configured to detect network anomalies across a plurality of network scope levels simultaneously with attribution of the detected network anomalies. For example, network anomaly scope model 362 may determine a scope of the root cause of network anomalies and generate actions and/or recommendations for addressing the network anomalies. The transformer model of network anomaly scope model 362 may allow data for different network scope levels to be stacked together and processed in a shorter amount of time as compared with loop-based systems that sequentially determine whether a root cause of a network anomaly is associated with each network scope level of a plurality of network scope levels. NMS 300 may apply the transformer model of network anomaly scope model 362 to detect network anomalies and determine a network scope level of root causes of the detected anomalies. NMS 300 generate information that identifies the root causes of the detected anomalies and generate recommendations to remediate the detected network anomalies. In some examples, a high rate of disconnect events at one or more sites of sites 102 may cause NMS 300 to perform anomaly scope detection using the transformer model of network anomaly scope model 362.

In some examples, processing circuitry 306 of NMS 300 may generate, based on the connection event data 370, an input matrix including a plurality of entries. Each entry of the plurality of entries of the input matrix includes connection event data corresponding to a network entity of a plurality of network entities indicating a level of impact of a network failure at the network entity. To detect the one or more network anomalies, processing circuitry 306 is configured to apply the transformer model to generate, based on the input matrix, an output matrix including a plurality of entries corresponding to the plurality of entries of the input matrix. Each entry of the plurality of entries of the output matrix includes a severity score that indicates a probability that an anomaly of the one or more anomalies is present at the network entity corresponding to the entry.

For example, connection event data 370 may be aggregated in an input matrix for input to the transformer model of network anomaly scope model 362. To aggregate connection event data 370, NMS 300 may place a set of connection event data for each network entity of a plurality of network entities into an entry of the plurality of entries of the input matrix. Each network entity of the plurality of network entities may be associated with a network scope level. For example, each site of sites 102 may be associated with a site network scope level. Each organization of a plurality of organizations corresponding to sites 102 may be associated with an organization network scope level. Each service provider of one or more service providers may be associated with a service provider network scope level. One or more patterns of connection event data 370 may indicate a network anomaly associated with a specific network scope level. For example, some patterns indicate a network anomaly associated with a site, some patterns indicate a network anomaly associated with an organization, and some patterns indicate a network anomaly associated with a service provider. In response to connection event data 370 being aggregated in the input matrix so that data is organized by network entity, this may improve an ability of network anomaly scope model 362 to determine the network scope level associated with the network anomaly as compared with systems that do not aggregate input data.

The transformer model of network anomaly scope model 362 may recognize different categories of network anomalies. For example, network anomaly scope model 362 may scale data for different entity types (e.g., site, organization, service provider) by applying scaling factors based on the level of impact of a failure at each network scope. For example, a network anomaly corresponding to a service provider may impact a large number of APs (e.g., tens of thousands of APs), a network anomaly corresponding to an organization may impact a medium number of APs (e.g., thousands of APs), and a network anomaly corresponding to a site may impact a comparatively small number of APs (e.g., hundreds of APs. This means that a number of disconnect events for network anomalies at the site network scope level may be smaller than a number of disconnect events for network anomalies at the organization network scope level, and the number of disconnect events for network anomalies at the organization network scope level may be smaller than a number of disconnect events for network anomalies at the service provider network scope level. In some examples, the scaling factor for each network scope level may be based on a mean or median number of disconnect events for network anomalies at the respective network scope level.

In some examples, to determine the level of impact corresponding to each network entity of the plurality of network entities to generate the input matrix for the network anomaly scope model 362, NMS 300 is configured to determine a number of disconnection events corresponding to each network entity of the plurality of network entities over a period of time. For example, disconnection event information 374 may indicate one or more network entities associated with each disconnection event of a plurality of disconnection events. Disconnection event timestamps 378 may indicate a time at which each disconnection event of the plurality of disconnection events occurs. This means that NMS 300 is configured to determine a number of disconnect events associated with each network entity of the plurality of network entities over a period of time by analyzing disconnection event information 374 and disconnection event timestamps 378.

Processing circuitry 306 is configured to apply network anomaly scope model 362 to transform an input matrix comprising a plurality of entities into an output matrix comprising a plurality of entities. To detect one or more network anomalies, processing circuitry 306 is configured to apply the network anomaly scope model 362 to determine the severity score for each entry of the plurality of entries of the output matrix based on the number of disconnection events associated with the network entity corresponding to the entry over the period of time. As described above, the severity may be scaled based on the network scope level of the network entity. For example, the number of disconnect events corresponding to a network anomaly at a site may be lower than the number of disconnect events corresponding to an organization, and so on. In any case, the severity score of an entry of the input matrix may indicate a likelihood that the network entity corresponding to the entry is associated with a network anomaly.

In some examples, the level of impact of the network failure at the network entity corresponding to each entry of the plurality of entries of the input matrix is indicated by a number of disconnection events associated with the network entity over a period of time. To detect the one or more network anomalies, processing circuitry 306 is configured to apply the network anomaly scope model 362 to determine the severity score for each entry of the plurality of entries of the output matrix based on the number of disconnection events associated with the network entity corresponding to the entry over the period of time. A greater number of disconnection events over a period of time may correspond to a higher severity score and a lower number of disconnection events over the period of time may correspond to a lower severity score. To detect the one or more network anomalies, processing circuitry 306 is configured to apply network anomaly scope model 362 to compare the severity score of each entry of the plurality of entries of the output matrix with one or more anomaly thresholds. Network anomaly scope model 362 may detect the one or more network anomalies based on comparing the severity score of each entry of the plurality of entries of the output matrix with the one or more anomaly thresholds. For example, when the severity score for a network entity exceeds a threshold, this may indicate a network anomaly associated with the network entity.

To generate the input matrix for processing by network anomaly scope model 362, processing circuitry 306 may aggregate a set of data of connection event data 370 corresponding to each network entity of a plurality of network entities. For example, when the plurality of network entities comprises 2,000 sites, 1,000 organizations and 500 service providers, the input matrix may include 3,500 entries, each corresponding to a network entity of the plurality of network entities. Since sites can be part of organizations and service providers provide service to organizations and sites, some data that is part of an entry corresponding to a site may also be part of an entry for an organization and/or an entry for a service provider. Additionally, or alternatively, data that is part of an entry corresponding to a service provider may also be part of one or more entries corresponding to organizations and one or more entries corresponding to sites.

To generate the output matrix based on the input matrix, network anomaly scope model 362 may determine a severity score corresponding to each entry of the plurality of entries of the output matrix. Network anomaly scope model 362 may apply one or more anomaly thresholds may to the severity score for each entry of the plurality of entries of the output matrix to identify one or more network entities having a high likelihood of a network anomaly occurring. For example, the anomaly threshold value may be set within a range from between 60% and 90% of APs located within the respective network entity. For example, when 70% of APs within site 102A disconnect NMS 130 within a period of time, network anomaly scope model 362 may determine that it is likely that a network anomaly is occurring at site 102A.

In some cases, network anomaly scope model 362 may apply the same anomaly threshold to every network entity. In other examples, network anomaly scope model 362 may apply different anomaly thresholds to different kinds of network entity (e.g., different thresholds for each of sites, organizations, and service providers). Network anomaly scope model 362 may attribute a root cause of a detected network anomaly to a network scope level based on one or more network entities including severity scores above an anomaly threshold. Network anomaly scope model 362 may determine one or more recommended actions to remediate detected network anomalies. For example, applying one or more anomaly thresholds to the output matrix from the transformer may result in 10 entities identified as including network anomalies including six organizations and four service providers. Network anomaly scope model 362 may attribute a detected network anomaly to a root cause at the service provider network scope level.

NMS 300 may generate one or more notifications for output to a network administrator (e.g., administrator device 111) that the root cause of a network anomaly is associated with a service provider of one or more service providers. NMS 300 may, in some examples, generate recommendations to work around the service provider failure or otherwise remediate network failures. In some examples, NMS 300 may use severity scores corresponding to the detected anomalies to determine whether to generate one or more recommendations for output to the network administrator.

Although the techniques of the present disclosure are described in this example as performed by NMS 300, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 300, or may be distributed throughout the network, and may or may not form a part of NMS 300.

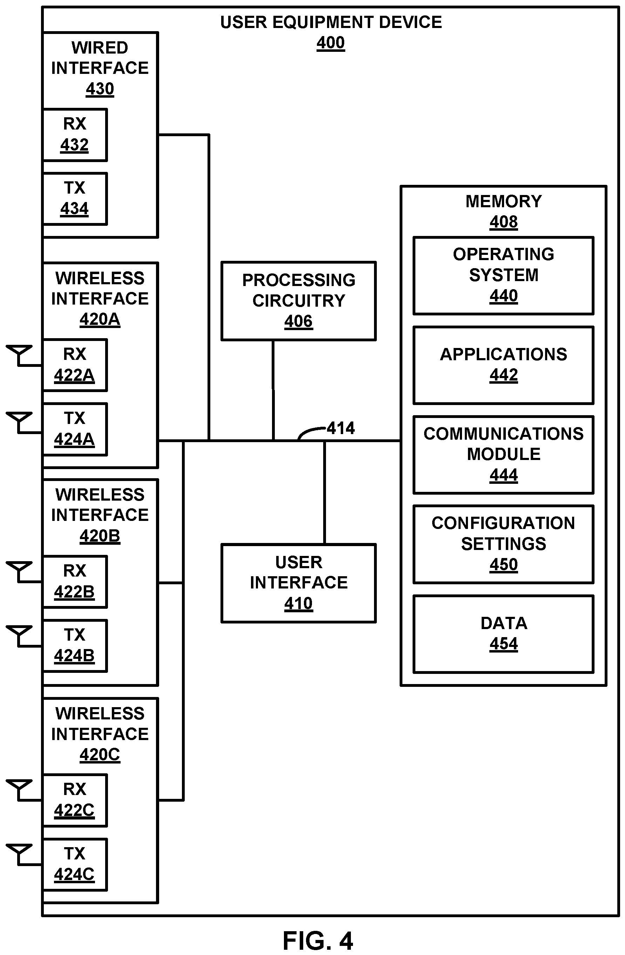

FIG. 4 shows an example UE device 400, in accordance with one or more techniques of this disclosure. Example UE device 400 shown in FIG. 4 may be used to implement any of UEs 148 as shown and described herein with respect to FIG. 1A. UE device 400 may include any type of wireless client device, and the disclosure is not limited in this respect. For example, UE device 400 may include a mobile device such as a smart phone, tablet or laptop computer, a personal digital assistant (PDA), a wireless terminal, a smart watch, a smart ring, or any other type of mobile or wearable device. In some examples, UE device 400 may also include a wired client-side device, e.g., an IoT device such as a printer, a security sensor or device, an environmental sensor, or any other device connected to the wired network and configured to communicate over one or more wireless networks.

UE device 400 includes a wired interface 430, wireless interfaces 420A-420C (collectively, "wireless interfaces 420"), processing circuitry 406, memory 408, and a user interface 410. The various elements are coupled together via a bus 414 over which the various elements may exchange data and information. Wired interface 430 represents a physical network interface and includes a receiver 432 and a transmitter 434. Wired interface 430 may be used, if desired, to couple, either directly or indirectly, UE device 400 to a wired network device, such as one of switches 146 of FIG. 1A, within the wired network via a cable, such one or more Ethernet cables.

First, second and third wireless interfaces 420A, 420B, and 420C include receivers 422A, 422B, and 422C, respectively, each including a receive antenna via which UE device 400 may receive wireless signals from wireless communications devices, such as APs 142 of FIG. 1A, AP 200 of FIG. 2, other UEs 148, or other devices configured for wireless communication. First, second, and third wireless interfaces 420A, 420B, and 420C further include transmitters 424A, 424B, and 424C, respectively, each including transmit antennas via which UE device 400 may transmit wireless signals to wireless communications devices, such as APs 142 of FIG. 1A, AP 200 of FIG. 2, other UEs 148 and/or other devices configured for wireless communication. In some examples, first wireless interface 420A may include a Wi-Fi 802.11 interface (e.g., 2.4 GHz and/or 5 GHz) and second wireless interface 420B may include a Bluetooth interface and/or a Bluetooth Low Energy interface. Third wireless interface 420C may include, for example, a cellular interface through which UE device 400 may connect to a cellular network.

Processing circuitry 406 may include fixed function circuitry and/or programmable processing circuitry. Processing circuitry 406 may include any one or more of a microprocessor, a controller, a DSP, GPU, TPU, an ASIC, an FPGA, or equivalent discrete or analog logic circuitry. In some examples, processing circuitry 406 may include multiple components, such as any combination of one or more microprocessors, one or more controllers, one or more DSPs, GPUs, TPUs, one or more ASICs, or one or more FPGAs, as well as other discrete or integrated logic circuitry, which may be physically located in one or more devices in one or more physical locations. Processing circuitry 406 may execute software instructions, such as those used to define a software or computer program, stored to a computer-readable storage medium (such as memory 408), such as non-transitory computer-readable mediums including a storage device (e.g., a disk drive, or an optical drive) or a memory (such as Flash memory or RAM) or any other type of volatile or non-volatile memory, that stores instructions to cause the processing circuitry 406 to perform the techniques described herein.

Processing circuitry 406 may be capable of processing instructions stored in memory 408. In some examples, memory 408 includes a computer-readable medium that includes instructions that, when executed by processing circuitry 406, cause UE device 400 and processing circuitry 406 to perform various functions attributed to them herein. Memory 408 may include any volatile, non-volatile, magnetic, optical, or electrical media, such as a RAM, ROM, NVRAM, EEPROM, FRAM, DRAM, flash memory, or any other digital media. Memory 408 may include one or more devices configured to store programming modules and/or data associated with operation of UE device 400. For example, memory 408 may include a computer-readable storage medium, such as a non-transitory computer-readable medium including a storage device (e.g., a disk drive, or an optical drive) or a memory (such as Flash memory or RAM) or any other type of volatile or non-volatile memory, that stores instructions to cause the processing circuitry 406 to perform the techniques described herein.

A user may interact with UE device 400 through user interface 410. User interface 410 may include a display such as an LCD, an LED display, an OLED display, or other type of screen, with which processing circuitry 406 may present information related to UE device 400 and/or one or more services received by UE device 400. In addition, user interface 410 may include an input mechanism to receive input from the user. The input mechanisms may include, for example, any one or more of buttons, a keypad (e.g., an alphanumeric keypad), a peripheral pointing device, a touch screen, or another input mechanism that allows the user to navigate through user interfaces presented by processing circuitry 406 of UE device 400 and provide input. In other examples, user interface 410 also includes audio circuitry for providing audible notifications, instructions, or other sounds to the user, receiving voice commands from the user, or both. Memory 408 may include instructions for operating user interface 410.

In this example, memory 408 is configured to store an operating system 440, applications 442, a communications module 444, configuration settings 450, and data 454. Communications module 444 includes program code that, when executed by processing circuitry 406, enables UE device 400 to communicate using any of wired interface 430 and/or wireless interfaces 420. Configuration settings 450 include any device settings for UE device 400 settings for each of wireless interfaces 420.

Data 454 may include, for example, a status/error log including a list of events specific to UE device 400. The events may include a log of both normal events and error events according to a logging level based on instructions from NMS 130. Data 454 may store any data used and/or generated by UE device 400, such as data used to calculate one or more metrics or identify relevant behavior data, that is collected by UE device 400 and either transmitted directly to NMS 130 or transmitted to any of APs 142 in a wireless network of wireless networks 106 for further transmission to NMS 130. In some examples, data 454 indicates one or more events where UE device 400 is not able to connect to a network via APs 142, or experiences decreased quality of service via APs 142. These one or more events may each correspond to a network anomaly. Network anomalies represent events where one or more of APs 142 disconnect from NMS 130, meaning that UE 400 cannot connect to the network via disconnected APs.

As described herein, UE device 400 may measure and report network data from data 454 to NMS 130. The network data may comprise event data, telemetry data, and/or other data. In some examples, the network data may include data corresponding to one or more sessions between UE device 400 and NMS 130. For example, UE device 400 may form one or more sessions with a service provider device such as a server of a video streaming service. Data 454 may include information corresponding to the one or more sessions including information indicating a quality of one or more sessions and/or data corresponding to one or more failed sessions. The network data may include various parameters indicative of the performance and/or status of the wireless network.

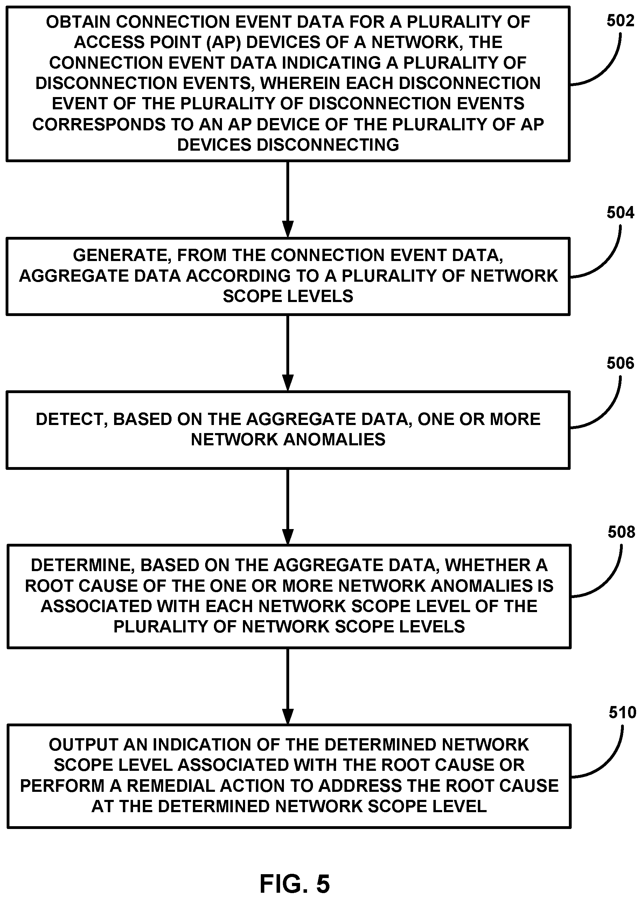

FIG. 5 is a flow diagram illustrating an example operation for detecting network anomalies and identifying root causes of detected network anomalies, in accordance with one or more techniques of this disclosure. The example operation is described with respect to network system 100 FIGS. 1A-1B, and components thereof. However, the techniques of FIG. 5 may be performed by different components of sensor network system 100, or by additional or alternative systems.

NMS 130 may obtain connection event data 138 for a plurality of APs 142, the connection event data 138 indicating a plurality of disconnection events (502). In some examples, each disconnection event of the plurality of disconnection events corresponds to an AP of APs 142. That is, each disconnection event of the plurality of disconnection events may represent an AP of APs 142 disconnecting from NMS 130. For example, each connection session of connection sessions 128 may connect one or more APs of APs 142 to NMS 130. Each site of sites 102 may receive service from and ISP of ISPs 129. Each site of sites 102 may be part of an organization of a plurality of organizations. This means that a network anomaly occurring at a site, an organization, or an ISP, may cause one or more of connection sessions 128 to go offline, resulting in one or more disconnection events.

In some examples, the connection event data 138 may indicate, for each disconnection event of the plurality of disconnection events, an AP corresponding to the disconnection event and a time at which the disconnection event occurs. This allows NMS 130 to aggregate connection event data 138 to indicate one or more disconnection events corresponding to each network entity of a plurality of network entities over a period of time. For example, NMS 130 may be able to determine, based on a public IP address for an AP, a site associated with the AP, an organization associated with the AP, and a service provider associated with the AP.

NMS 130 may generate, from the connection event data 138, aggregate data according to a plurality of network scope levels (504). In some examples, NMS 130 may generate the aggregate data based on network scope information. For example, NMS 130 may generate network scope information by identifying, for each disconnection event of the plurality of disconnection events of connection event data 138, an AP of APS 142, a site of sites 102, an organization of a plurality of organizations, and an ISP of ISPs 129. For example, each disconnection event of the plurality of disconnection events may be associated with an AP public IP address for an AP corresponding to the disconnection event.

NMS 130 may detect, based on the aggregate data, one or more network anomalies (506). In some examples, NMS 130 applies one or more thresholds to detect the one or more network anomalies. NMS 130 may determine, based on the aggregate data, whether a root cause of the one or more network anomalies is associated with each network scope level of the plurality of network scope levels (508). NMS 130 may output an indication of the determined network scope level associated with the root cause or perform a remedial action to address the root cause at the determined network scope level (510).

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively, or additionally, if implemented in software or firmware, the techniques may be realized at least in part by a computer-readable medium comprising instructions that, when executed, cause a processor to perform one or more of the methods described above. For example, the computer-readable medium may store and/or convey such instructions for execution by a processor.

A computer-readable medium may form part of a computer program product, which may include packaging materials. A computer-readable medium may comprise a computer data storage medium such as RAM, ROM, NVRAM, EEPROM, flash memory, magnetic or optical data storage media, and the like. In some examples, an article of manufacture may comprise one or more computer-readable storage media.

In some examples, a computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

A computer-readable medium may also or alternatively comprise a transmission medium by which instructions may be conveyed. A computer-readable transmission medium may include carrier waves, transmission signals or the like. A computer-readable transmission medium may convey instructions between components of a single computer system and/or between plural separate computer systems.

The code or instructions may be software and/or firmware executed by processing circuitry including one or more processors, such as one or more DSPs, general purpose microprocessors, ASICs, FPGAs, or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Therefore, from one perspective there have been described approaches for a network management system that includes a memory and processing circuitry in communication with the memory. The processing circuitry is configured to obtain connection event data. The connection event data indicates a plurality of disconnection events. The processing circuitry is also configured to generate, from the connection event data, aggregate data according to a plurality of network scope levels and detect, based on the aggregate data, one or more network anomalies. Additionally, the processing circuit is configured to determine, based on the aggregate data, whether a root cause of the one or more network anomalies is associated with each network scope level of the plurality of network scope levels and output an indication of the determined network scope level associated with the root cause or performing a remedial action to address the root cause at the determined network scope level.

Further examples are set out in the following numbered clauses.

Clause 1. A network management system comprising: a memory; and processing circuitry in communication with the memory and configured to: obtain connection event data for a plurality of access point (AP) devices, the connection event data indicating a plurality of disconnection events, wherein each disconnection event of the plurality of disconnection events corresponds to an AP device of the plurality of AP devices disconnecting; generate, from the connection event data, aggregate data according to a plurality of network scope levels; detect, based on the aggregate data, one or more network anomalies; determine, based on the aggregate data, whether a root cause of the one or more network anomalies is associated with each network scope level of the plurality of network scope levels; and output an indication of the determined network scope level associated with the root cause or performing a remedial action to address the root cause at the determined network scope level.

Clause 2. The network management system of clause 1, wherein the memory is configured to store a model, and wherein to determine whether the root cause of the one or more network anomalies is associated each network scope level of the plurality of network scope levels, the processing circuitry is configured to apply the model to process the aggregate data to simultaneously determine whether the root cause of the one or more network anomalies is associated with each network scope level of the plurality of network scope levels.

Clause 3. The network management system of clause 1 or 2, wherein the plurality of network scope levels comprise: a service provider network scope level comprising one or more service providers, wherein each service provider of the one or more service providers provides a network service to one or more organizations of a plurality of organizations; an organization network scope level comprising the plurality of organizations, wherein each organization of the plurality of organizations includes one or more sites of a plurality of sites; and a site network scope level comprising the plurality of sites, where in each site of the plurality of sites includes one or more AP devices of the plurality of AP devices.

Clause 4. The network management system of clause 3, wherein the processing circuitry is configured to, simultaneously: determine, based on the aggregate data, whether the root cause of the one or more network anomalies is associated with the service provider network scope level; determine, based on the aggregate data, whether the root cause of the one or more network anomalies is associated with the organization network scope level; and determine, based on the aggregate data, whether the root cause of the one or more network anomalies is associated with the site network scope level.

Clause 5. The network management system of clause 3 or 4, wherein the processing circuitry is configured to: generate network scope information by identifying, for each disconnection event of the plurality of disconnection events: an AP device of the plurality AP devices corresponding to the disconnection event; a site of the plurality of sites corresponding to the disconnection event; an organization of the plurality of organizations corresponding to the disconnection event; and a service provider of the one or more service providers corresponding to the disconnection event; generate the aggregate data based on the network scope information.

Clause 6. The network management system of any preceding clause, wherein the memory is configured to store a transformer model, wherein to generate the aggregate data, the processing circuitry is configured to generate, based on the connection event data, an input matrix including a plurality of entries, wherein each entry of the plurality of entries of the input matrix includes connection event data corresponding to a network entity of a plurality of network entities, wherein to detect the one or more network anomalies, the processing circuitry is configured to apply the transformer model to generate, based on the input matrix, an output matrix including a plurality of entries corresponding to the plurality of entries of the input matrix, and wherein each entry of the plurality of entries of the output matrix includes a severity score that indicates a probability that a network anomaly of the one or more network anomalies is present at the network entity corresponding to the entry.

Clause 7. The network management system of clause 6, wherein each entry of the plurality of entries of the input matrix includes connection event data corresponding to a network entity of a plurality of network entities that is scaled according to a scaling factor indicating a level of impact of a failure a network scope level for network entity, and wherein to detect the one or more network anomalies, the processing circuitry is configured to determine the severity score for each entry of the plurality of entries of the output matrix based on the number of disconnection events associated with the network entity corresponding to the entry over the period of time.

Clause 8. The network management system of clause 6 or 7, wherein to detect the one or more network anomalies, the processing circuitry is further configured to: compare the severity score of each entry of the plurality of entries of the output matrix with one or more anomaly thresholds; and detect the one or more network anomalies based on comparing the severity score of each entry of the plurality of entries of the output matrix with the one or more anomaly thresholds.

Clause 9. The network management system of clause 6, 7 or 8, wherein each entry of the plurality of entries of the input matrix further includes scope information indicating a network scope level of the plurality of network scope levels corresponding to the network entity of the plurality of network entities, and wherein the processing circuitry is configured to determine whether the root cause of the one or more network anomalies is associated with each network scope level of the plurality of network scope levels based on the detected one or more network anomalies and the scope information for each entry of the plurality of entries of the input matrix.

Clause 10. The network management system of any preceding clause, wherein the processing circuitry is further configured to generate the indication to indicate whether the root cause of the one or more network anomalies is associated with each network scope level of the plurality of network scope levels.

Clause 11. A method comprising: obtaining, by processing circuitry of a network management system, connection event data for a plurality of access point (AP) devices, the connection event data indicating a plurality of disconnection events, wherein each disconnection event of the plurality of disconnection events corresponds to an AP device of the plurality of AP devices disconnecting, wherein the processing circuitry is in communication with a memory of the network management system; generating, by the processing circuitry from the connection event data, aggregate data according to a plurality of network scope levels; detecting, by the processing circuitry based on the aggregate data, one or more network anomalies; determining, by the processing circuitry based on the aggregate data, whether a root cause of the one or more network anomalies is associated with each network scope level of the plurality of network scope levels; and outputting, by the processing circuitry, an indication of the determined network scope level associated with the root cause or performing a remedial action to address the root cause at the determined network scope level.

Clause 12. The method of clause 11, wherein the memory is configured to store a model, and wherein determining whether the root cause of the one or more network anomalies is associated each network scope level of the plurality of network scope levels comprises applying, by the processing circuitry, the model to process the aggregate data to simultaneously determine whether the root cause of the one or more network anomalies is associated with each network scope level of the plurality of network scope levels.

Clause 13. The method of clause 11 or 12, wherein the plurality of network scope levels comprise: a service provider network scope level comprising one or more service providers, wherein each service provider of the one or more service providers provides a network service to one or more organizations of a plurality of organizations; an organization network scope level comprising the plurality of organizations, wherein each organization of the plurality of organizations includes one or more sites of a plurality of sites; and a site network scope level comprising the plurality of sites, where in each site of the plurality of sites includes one or more AP devices of the plurality of AP devices.

Clause 14. The method of clause 13, further comprising, simultaneously: determining, by the processing circuitry based on the aggregate data, whether the root cause of the one or more network anomalies is associated with the service provider network scope level; determining, by the processing circuitry based on the aggregate data, whether the root cause of the one or more network anomalies is associated with the organization network scope level; and determining, by the processing circuitry based on the aggregate data, whether the root cause of the one or more network anomalies is associated with the site network scope level.

Clause 15. The method of clause 13 or 14, further comprising: generating, by the processing circuitry, network scope information by identifying, for each disconnection event of the plurality of disconnection events: an AP device of the plurality AP devices corresponding to the disconnection event; a site of the plurality of sites corresponding to the disconnection event; an organization of the plurality of organizations corresponding to the disconnection event; and a service provider of the one or more service providers corresponding to the disconnection event; generating, by the processing circuitry, the aggregate data based on the network scope information.

Clause 16. The method of any of clauses 11 to 15, wherein the memory is configured to store a transformer model, wherein generating the aggregate data comprises generating, by the processing circuitry based on the connection event data, an input matrix including a plurality of entries, wherein each entry of the plurality of entries of the input matrix includes connection event data corresponding to a network entity of a plurality of network entities, wherein detecting the one or more network anomalies comprises applying, by the processing circuitry, the transformer model to generate, based on the input matrix, an output matrix including a plurality of entries corresponding to the plurality of entries of the input matrix, and wherein each entry of the plurality of entries of the output matrix includes a severity score that indicates a probability that a network anomaly of the one or more network anomalies is present at the network entity corresponding to the entry.

Clause 17. The method of clause 16, wherein each entry of the plurality of entries of the input matrix includes connection event data corresponding to a network entity of a plurality of network entities that is scaled according to a scaling factor indicating a level of impact of a failure a network scope level for network entity, and wherein detecting the one or more network anomalies comprises determining, by the processing circuitry, the severity score for each entry of the plurality of entries of the output matrix based on the number of disconnection events associated with the network entity corresponding to the entry over the period of time.

Clause 18. The method of clause 16 or 17, wherein detecting the one or more network anomalies comprises: comparing, by the processing circuitry, the severity score of each entry of the plurality of entries of the output matrix with one or more anomaly thresholds; and detecting, by the processing circuitry, the one or more network anomalies based on comparing the severity score of each entry of the plurality of entries of the output matrix with the one or more anomaly thresholds.

Clause 19. The method of clause 16, 17 or 18, wherein each entry of the plurality of entries of the input matrix further includes scope information indicating a network scope level of the plurality of network scope levels corresponding to the network entity of the plurality of network entities, and wherein the method further comprises determining, by the processing circuitry, whether the root cause of the one or more network anomalies is associated with each network scope level of the plurality of network scope levels based on the detected one or more network anomalies and the scope information for each entry of the plurality of entries of the input matrix.

Clause 20. A computer-readable medium comprising instructions that, when executed by processing circuitry, causes the processing circuitry to: obtain connection event data for a plurality of access point (AP) devices, the connection event data indicating a plurality of disconnection events, wherein each disconnection event of the plurality of disconnection events corresponds to an AP device of the plurality of AP devices disconnecting, wherein the processing circuitry is in communication with a memory of the network management system; generate, from the connection event data, aggregate data according to a plurality of network scope levels; detect, based on the aggregate data, one or more network anomalies; determine, based on the aggregate data, whether a root cause of the one or more network anomalies is associated with each network scope level of the plurality of network scope levels; and output an indication of the determined network scope level associated with the root cause or performing a remedial action to address the root cause at the determined network scope level.

## Claims

1. A network management system comprising:
a memory; and
processing circuitry in communication with the memory and configured to:
obtain connection event data for a plurality of access point, AP, devices, the connection event data indicating a plurality of disconnection events, wherein each disconnection event of the plurality of disconnection events corresponds to an AP device of the plurality of AP devices disconnecting;
generate, from the connection event data, aggregate data according to a plurality of network scope levels;
detect, based on the aggregate data, one or more network anomalies;
determine, based on the aggregate data, whether a root cause of the one or more network anomalies is associated with each network scope level of the plurality of network scope levels; and
output an indication of the determined network scope level associated with the root cause or performing a remedial action to address the root cause at the determined network scope level.

2. The network management system of claim 1, wherein the memory is configured to store a model, and wherein to determine whether the root cause of the one or more network anomalies is associated each network scope level of the plurality of network scope levels, the processing circuitry is configured to apply the model to process the aggregate data to simultaneously determine whether the root cause of the one or more network anomalies is associated with each network scope level of the plurality of network scope levels.

3. The network management system of any of claims 1-2, wherein the plurality of network scope levels comprise:
a service provider network scope level comprising one or more service providers,
wherein each service provider of the one or more service providers provides a network service to one or more organizations of a plurality of organizations;
an organization network scope level comprising the plurality of organizations, wherein each organization of the plurality of organizations includes one or more sites of a plurality of sites; and
a site network scope level comprising the plurality of sites, where in each site of the plurality of sites includes one or more AP devices of the plurality of AP devices.

4. The network management system of claim 3, wherein the processing circuitry is configured to, simultaneously:
determine, based on the aggregate data, whether the root cause of the one or more network anomalies is associated with the service provider network scope level;
determine, based on the aggregate data, whether the root cause of the one or more network anomalies is associated with the organization network scope level; and
determine, based on the aggregate data, whether the root cause of the one or more network anomalies is associated with the site network scope level.

5. The network management system of claim 3 or 4, wherein the processing circuitry is configured to:
generate network scope information by identifying, for each disconnection event of the plurality of disconnection events:
an AP device of the plurality AP devices corresponding to the disconnection event;
a site of the plurality of sites corresponding to the disconnection event;
an organization of the plurality of organizations corresponding to the disconnection event; and
a service provider of the one or more service providers corresponding to the disconnection event;
generate the aggregate data based on the network scope information.

6. The network management system of any of claims 1-5, wherein the memory is configured to store a transformer model,
wherein to generate the aggregate data, the processing circuitry is configured to generate, based on the connection event data, an input matrix including a plurality of entries, wherein each entry of the plurality of entries of the input matrix includes connection event data corresponding to a network entity of a plurality of network entities,
wherein to detect the one or more network anomalies, the processing circuitry is configured to apply the transformer model to generate, based on the input matrix, an output matrix including a plurality of entries corresponding to the plurality of entries of the input matrix, and wherein each entry of the plurality of entries of the output matrix includes a severity score that indicates a probability that a network anomaly of the one or more network anomalies is present at the network entity corresponding to the entry.

7. The network management system of claim 6,
wherein each entry of the plurality of entries of the input matrix includes connection event data corresponding to a network entity of a plurality of network entities that is scaled according to a scaling factor indicating a level of impact of a failure a network scope level for network entity, and
wherein to detect the one or more network anomalies, the processing circuitry is configured to determine the severity score for each entry of the plurality of entries of the output matrix based on the number of disconnection events associated with the network entity corresponding to the entry over the period of time.

8. The network management system of claim 6 or 7, wherein to detect the one or more network anomalies, the processing circuitry is further configured to:
compare the severity score of each entry of the plurality of entries of the output matrix with one or more anomaly thresholds; and
detect the one or more network anomalies based on comparing the severity score of each entry of the plurality of entries of the output matrix with the one or more anomaly thresholds.

9. The network management system of claim 6, 7 or 8,
wherein each entry of the plurality of entries of the input matrix further includes scope information indicating a network scope level of the plurality of network scope levels corresponding to the network entity of the plurality of network entities, and
wherein the processing circuitry is configured to determine whether the root cause of the one or more network anomalies is associated with each network scope level of the plurality of network scope levels based on the detected one or more network anomalies and the scope information for each entry of the plurality of entries of the input matrix.

10. The network management system of any of claims 1-9, wherein the processing circuitry is further configured to generate the indication to indicate whether the root cause of the one or more network anomalies is associated with each network scope level of the plurality of network scope levels.

11. A method comprising:
obtaining connection event data for a plurality of access point, AP, devices, the connection event data indicating a plurality of disconnection events, wherein each disconnection event of the plurality of disconnection events corresponds to an AP device of the plurality of AP devices disconnecting;
generating, from the connection event data, aggregate data according to a plurality of network scope levels;
detecting, based on the aggregate data, one or more network anomalies;
determine, based on the aggregate data, whether a root cause of the one or more network anomalies is associated with each network scope level of the plurality of network scope levels; and
outputing an indication of the determined network scope level associated with the root cause or performing a remedial action to address the root cause at the determined network scope level.

12. The method of claim 11, further comprising steps corresponding to the functionality of the network management system of any of claims 2-10.

13. A computer-readable medium comprising instructions that, when executed by one or more programmable processors, cause one or more programmable processors to become configured as the network management system of any of claims 1-10.
